# FASCICULE DE BREVET EUROPEEN

(11) **EP 2 468 783 B1**
(45) Date de publication et mention de la délivrance du brevet: **24.09.2014**
(21) Numéro de dépôt: 11193549.0
(22) Date de dépôt: 14.12.2011
(51) Int. Cl.: C08G 18/10, C08G 18/12, C08G 18/40, C09J 175/04

(54) **Polyuréthane à blocs polyéther et polyester et groupe terminal alkoxysilane**
Polyurethan mit Polyether- und Polyesterblocks, und Alkoxysilan-Endgruppe
Polyurethane with polyether and polyester blocks and alkoxysilane end group

(30) Priorité: 22.12.2010 FR 1061053
(43) Date de publication de la demande: 27.06.2012
(73) Titulaire: BOSTIK SA, 93210 La Plaine-St-Denis (FR)
(72) Inventeur: Laferte, Olivier, 60350 TROSLY BREUIL (FR); Fouquay, Stéphane, 76130 MONT SAINT AIGNAN (FR); Guillotte, Régis, 60170 RIBECOURT DRESLINCOURT (FR)
(74) Mandataire: Granet, Pierre

(56) Documents cités:
- WO-A1-2007/050426
- US-A- 4 345 053
- US-A1- 2006 247 369
- US-A1- 2008 114 098
- US-A1- 2010 204 384

## Description

La présente invention a pour objet un polyuréthane à blocs polyéther et polyester et groupe terminal alkoxysilane, qui présente après réticulation une cohésion élevée, convenant à son utilisation comme adhésif ou mastic, notamment comme adhésif thermofusible.

On connaît des polymères à groupe terminal alkoxysilane pour lesquels ledit groupe est relié, directement ou indirectement, à une chaîne principale qui consiste d'une chaîne polyéther.

Connus généralement dans le domaine des adhésifs sous la dénomination de polymères MS (pour Modified Silane), de tels polymères sont disponibles dans le commerce notamment auprès de la société Kaneka. De masse moléculaire généralement comprise entre 10 et 50 kDa, ces polymères, généralement liquides, sont largement utilisés dans de nombreux domaines industriels et de la vie courante en vue de l'assemblage par collage d'une grande diversité d' objets (qualifiés aussi de substrats) qui peuvent être constitués des matériaux les plus variés.

Un tel polymère est tout d'abord appliqué, en combinaison avec un catalyseur et sous la forme d'une couche adhésive, sur au moins l'une des 2 surfaces qui appartiennent respectivement aux 2 substrats à assembler et qui sont destinées à être mise en contact l'une avec l'autre dans l'assemblage. Après la mise en contact des 2 substrats et l'application, le cas échéant, d'une pression au niveau de leur surface de tangence, le polymère réagit avec l'eau qui se trouve dans le milieu environnant sous la forme d'humidité atmosphérique ou d'humidité apportée par lesdits substrats.

Cette réaction, dite de réticulation, conduit après son achèvement à la formation d'un joint adhésif entre les 2 substrats qui est constitué par le polymère réticulé en un réseau tridimensionnel formé par les chaînes polymériques reliées entre elles par des liaisons de type siloxane. Ce joint assure la solidité de l'assemblage des 2 substrats ainsi obtenu.

Toutefois, les propriétés mécaniques des polymères MS réticulés, notamment leur cohésion, sont généralement insuffisantes pour de nombreuses applications, correspondant à celles pour lesquelles le joint adhésif doit être capable de résister à des contraintes importantes.

De plus, la cohésion définitive du joint adhésif n'est obtenue qu'après achèvement de la réaction de réticulation, soit après un certain temps (dénommé temps de montée en cohésion ou temps de prise), durant lequel l'assemblage ne peut être commodément manipulé ou même doit parfois être maintenu par des moyens mécaniques de serrage (par exemple des pinces ou des étais). Les polymères MS présentent par conséquent l'inconvénient d'une absence de « green strength » ou d'une « green strength » très insuffisante. On entend désigner par ce terme de « green strength » la capacité d'un adhésif à assurer immédiatement, dès la mise en contact des 2 substrats durant leur assemblage par collage, une cohésion convenable du joint adhésif qui évite les inconvénients observés durant le temps de prise.

Pour remédier à ces inconvénients il est donc souvent nécessaire, dans la pratique, de mettre en oeuvre les polymères MS sous la forme de compositions adhésives qui comprennent en outre des additifs à effet renforçant (comme par exemple des charges minérales), ou visant à améliorer la green strength (comme par exemple des cires).

Les exemples 1-3 de WO 2007050426 décrivent la réaction entre un polyétherdiol et l'isocyanate aliphatique IPDI. Ensuite, le polyuréthane à groupe terminal -OH obtenu lors de l'étape précédente est mise à réagir avec une quantité stoechiométrique d'un isocyanatosilane.

L'invention a donc pour but de proposer des polymères à groupe terminal alkoxysilane, qui conduisent après réticulation à un joint adhésif présentant des propriétés mécaniques améliorées, et notamment une cohésion plus élevée.

Un autre but de l'invention est de proposer des polymères à groupe terminal alkoxysilane, qui présentent une « green strength » améliorée.

Il a à présent été trouvé que ces buts peuvent être atteints, en totalité ou en partie, par les polyuréthanes dont le procédé d'obtention est décrit ci-après.

L'invention concerne donc en premier lieu un procédé de préparation d'un polyuréthane à blocs polyuréthane-polyéther et polyuréthane-polyester comprenant au moins 2 blocs terminaux consistant chacun d'un bloc polyuréthane-polyester relié à un groupe terminal alkoxysilane, ledit procédé comprenant les étapes séquentielles :
(i) de réaction d'un mélange d'alcools comprenant un polyéther polyol (A) avec un excès stoechiométrique d'un diisocyanate (B), pour former un bloc polyuréthane-polyéther possédant au moins 2 groupes terminaux -NCO, ledit diisocyanate (B) étant soit un diisocyanate aliphatique, soit un diisocyanate aromatique de formule :

   NCO-R¹-NCO (I)

   dans laquelle R¹ représente un radical divalent aromatique hydrocarboné comprenant de 5 à 15 atomes de carbone qui peut être linéaire, ramifié ou cyclique, puis
(ii) de réaction du polyuréthane de l'étape (i) avec un excès stoechiométrique d'un polyester polyol (C), pour former un polyuréthane à blocs polyuréthane-polyéther et polyuréthane-polyester comprenant au moins 2 blocs terminaux consistant chacun d'un bloc polyuréthane-polyester relié à un groupe terminal -OH, puis
(iii) de réaction du polyuréthane à groupe terminal -OH de l'étape (ii) avec une quantité stoechiométrique d'un isocyanatosilane (D).

Il a à présent été trouvé que la mise en oeuvre du procédé selon l'invention conduit à la formation d'un polyuréthane homogène et stable en température.

Le polyuréthane ainsi obtenu forme, après réticulation à l'humidité atmosphérique en présence d'un catalyseur approprié, un joint adhésif qui présente des valeurs de cohésion supérieures à celle obtenues pour les polymères MS réticulés, et généralement supérieures à 3 MPa. De telles valeurs de cohésion permettent une utilisation comme adhésif structural ou semi-structural, par exemple comme joints d'étanchéité sur les supports usuels (béton, verre, marbre) dans le domaine du bâtiment, ou encore pour le collage de vitrages dans l'industrie automobile et navale.

De plus, le polyuréthane ainsi obtenu est un polymère thermoplastique (en milieu anhydre) dont le point de fusion (mesuré par calorimétrie différentielle à balayage) est compris entre 30 et 120 °C, de préférence entre 30 et 90°C. Il peut donc être utilisé en tant qu'adhésif thermofusible et appliqué à chaud sur l'interface des substrats à assembler. Par solidification à température ambiante, un joint adhésif solidarisant les substrats est ainsi immédiatement créé donnant à l'adhésif des propriétés avantageuses de « green strength ».

Le mélange d'alcools mis en oeuvre dans l'étape (i) comprend un ou plusieurs polyéthers polyols (A).

Les polyéthers polyols (A) sont généralement choisis parmi les polyéthers polyols aliphatiques et aromatiques. De préférence, leur masse moléculaire est comprise entre 0,5 et 20 kDa et leur fonctionnalité hydroxyle est comprise entre 2 et 4,6. La fonctionnalité hydroxyle est le nombre moyen de fonction hydroxyle par mole de polyéther polyol. La masse moléculaire indiquée est une masse moléculaire moyenne en nombre (généralement notée Mn) ; il en est de même pour toutes les masses moléculaires indiquées pour des polymères dans le présent texte, en l'absence d'indication contraire.

A titre d'exemples de polyéthers polyols aliphatiques, on peut citer les dérivés oxyalkylés de :
- diols (tels que l'éthylène glycol, le propylène glycol, le néopentyl glycol), de
- triols (tels que le glycérol , le triméthylolpropane et l'hexane-1,2,6-triol), ou de
- tétrols (tels que le pentaérythritol).
Ces produits sont largement disponibles dans le commerce.

Selon une variante préférée, le polyéther polyol (A) mis en oeuvre dans l'étape (i) est un polyéther diol seul ou en mélange avec jusqu'à 30 % en poids d'un polyéther triol.

On choisit, de manière plus préférée, le polyéther polyol (A) parmi les polypropylène glycols (ou PPG) de fonctionnalité hydroxyle égale à 2 ou 3 parmi lesquels on peut citer :
- le Voranol^{®} EP 1900 qui est un PPG difonctionnel de masse moléculaire environ 3800 Da, et d'indice hydroxyle I_{OH} égal à 28 mg KOH/g ;
- le Voranol^{®} CP 755 qui est un PPG trifonctionnel de masse moléculaire environ 700 Da et d'indice hydroxyle I_{OH} égal à 237 mg KOH/g ;
   tous deux disponibles auprès de la société Dow.

Selon une variante particulièrement avantageuse, on utilise comme polyéther polyol (A) un polypropylène glycol diol ou triol dont l'indice de polymolécularité varie de 1 à 1,4.

L'indice de polymolécularité est le rapport de la masse moléculaire moyenne en poids à la masse moléculaire moyenne en nombre. De tels polypropylène glycols sont disponibles commercialement sous la marque ACCLAIM^{®} auprès de la société Bayer. On peut citer comme exemples de tels PPG trifonctionnels l'ACCLAIM^{®} 6300 qui a une masse moléculaire d'environ 6000 Da et un I_{OH} égal à 28,3 mg KOH/g , et comme exemples de PPG difonctionnels :
- l'ACCLAIM^{®} 8200 N de masse moléculaire 8000 Da et d'I_{OH} égal à 13,5 mg KOH/g,
- l'ACCLAIM^{®} 12200 de masse moléculaire 12000 Da, et d'I_{OH} égal à 10 mg KOH/g,
- l'ACCLAIM^{®} 18200 de masse moléculaire 18000 Da, et d'I_{OH} égal à 6,5 mg KOH/g

Le mélange d'alcools mis en oeuvre dans l'étape (i) peut comprendre en outre un (ou plusieurs) allongeur de chaîne, choisi parmi les diols et les polyamines de masse moléculaire comprise entre 60 et 500 Da.

A titre d'illustration de tels diols, on citera l'éthylène glycol, le propylène glycol, le diéthylène glycol, le dipropylène glycol, méthyl-3 propane diol-1,5, le 1,4-butanediol, le 1,6-hexanediol, le 2-éthyl-1,3 hexanediol, le N,N bis(hydroxy-2 propyl)aniline, le 3-méthyl-1,5-pentanediol.

A titre d'illustration de telles polyamines, on citera l'éthylène diamine, la diphényl méthane diamine, l'isophorone diamine, l'hexaméthylène diamine, la diéthyltoluène diamine.

Conformément à l'étape (i) du procédé selon l'invention, on fait réagir au moins un polyéther polyol décrit précédemment avec un diisocyanate (B) de préférence de formule :

NCO-R¹-NCO (I)

dans laquelle R¹ représente un radical divalent aliphatique ou aromatique hydrocarboné comprenant de 5 à 15 atomes de carbone qui peut être linéaire, ramifié ou cyclique.

R¹ est avantageusement choisi parmi l'un des radicaux divalents suivants dont les formules ci-dessous font apparaître les 2 valences libres :
- a) le radical divalent dérivé de l'isophorone : 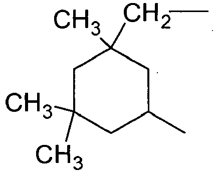
- b) 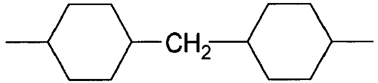
- c)
   -(CH₂)₆- (ou radical hexaméthylène)
- d) 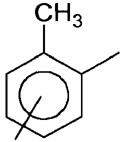
- e)

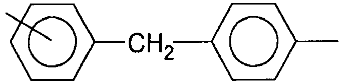

On fait réagir dans la présente étape (i) du procédé selon l'invention le polyéther polyol (A) avec un excès, en terme de groupe fonctionnel équivalent, du diisocyanate (B) tel que défini précédemment. Cela signifie que les quantités des 2 réactifs mises en oeuvre dans l'étape (i) correspondent à un excès du nombre équivalent de groupes -NCO (présents dans la quantité de diisocyanate) par rapport au nombre équivalent de groupes -OH (présents dans la quantité de polyéther(s) polyol(s) (A)) augmenté, le cas échéant, du nombre équivalent des groupes -OH, -NH₂, et/ou -NH- présents dans le diol et/ou la diamine utilisés comme allongeur de chaîne.

De préférence, ces quantités correspondent à un rapport équivalent -NCO/-OH compris entre 1,3 et 5. Ledit rapport est défini comme étant égal au nombre équivalent de groupes -NCO divisé par le nombre équivalent de groupes -OH, -NH₂, et/ou -NH- s'agissant des groupes fonctionnels portés par les quantités correspondantes des 2 réactifs, à savoir le diisocyanate d'une part et d'autre part le mélange de polyéthers polyols comprenant le cas échéant un allongeur de chaîne. Les quantités pondérales des réactifs à charger dans le réacteur sont déterminées sur la base de ce rapport, ainsi que, s'agissant des polyéthers polyols, sur leur indice d'hydroxyle I_{OH}. L'indice d'hydroxyle I_{OH} est le nombre de fonctions hydroxyle par gramme de polyéther polyol, le dit nombre étant exprimé, en particulier dans le présent texte, sous la forme du nombre équivalent de milligrammes de KOH utilisés dans le dosage des fonctions hydroxyle.

On préfère réaliser l'étape (i) en présence d'un catalyseur choisi par exemple parmi les organoétains ou les carboxylates de bismuth/zinc, et en introduisant la quantité appropriée de diisocyanate (B) dans la quantité appropriée de polyéther polyol (A) chargée au préalable dans le réacteur. La réaction est mise en oeuvre à une température comprise entre 70 et 100°C.

Le bloc polyuréthane-polyéther à groupes terminaux -NCO formé à l'issue de l'étape (i) est réagi avec un polyester polyol (C), conformément à l'étape (ii) du procédé selon l'invention.

Les polyols polyesters (C) sont choisis parmi les polyesters polyols aliphatiques et aromatiques, et les mélanges de ces composés. De préférence, leur masse moléculaire est comprise entre 1 et 10 kDa, de préférence entre 2 et 6 kDa, et leur fonctionnalité hydroxyle peut varier de 2 à 4. A titre d'exemples, on peut citer :
- les polyesters polyols d'origine naturelle tel que l'huile de ricin ;
- les polyesters polyols résultant de la condensation :
   - d'un ou plusieurs polyols aliphatiques (linéaires ramifiés ou cycliques) ou aromatiques tels que l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiéthanolamine et les mélanges de ces composés, avec
   - un ou plusieurs acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

Beaucoup de ces produits sont disponibles commercialement.

Parmi les polyesters polyol (C) utilisables on peut ainsi citer les produits suivants de fonctionnalité hydroxyle égale à 2 :
- le TONE^{®} 0240 (disponible auprès de Union Carbide) qui est une polycaprolactone de masse moléculaire environ 2000 Da, de I_{OH} égal à 56, ayant pour point de fusion environ 50°C,
- le DYNACOLL^{®} 7381 de masse moléculaire environ 3500 Da, de Ion égal à 30, ayant pour point de fusion environ 65°C,
- le DYNACOLL ^{e} 7360 qui résulte de la condensation de l'acide adipique avec l'hexane diol, a une masse moléculaire d'environ 3500 Da, un I_{OH} égal à 30 et un point de fusion environ 55°C,
- le DYNACOLL^{®} 7330 de masse moléculaire environ 3500 Da, de I_{OH} égal à 30, ayant pour point de fusion environ 85°C,
- le DYNACOLL^{®} 7363 qui résulte également de la condensation de l'acide adipique avec l'hexane diol, a une masse moléculaire d' environ 5500 Da, un I_{OH} égal à 21et un point de fusion d'environ 57°C.

Les produits DYNACOLL^{®} cités précédemment sont commercialisés par la société EVONIK.

De préférence, on utilise comme polyester polyol une polycaprolactone, l'huile de ricin ou encore un polyester polyol résultant de la condensation de l'éthanediol, du 1,3-propanediol et/ou du 1,6-hexanediol avec l'acide adipique et/ou l'acide phtalique.

On préfère mettre en oeuvre dans l'étape (ii) du procédé selon l'invention un ou plusieurs polyester polyols ayant une fonctionnalité -OH allant de 2 à 3, une fonctionnalité de 2 étant plus particulièrement préférée.

On fait réagir dans la présente étape (ii) du procédé selon l'invention le polyuréthane formé à l'étape (i) avec un excès du polyester polyol (C) en terme de groupe fonctionnel équivalent. De préférence les quantités de réactifs mises en oeuvre correspondent à un rapport équivalent -NCO/-OH compris entre 0,10 et 0,80, ledit rapport équivalent étant défini comme précédemment. Les quantités pondérales des réactifs à charger dans le réacteur sont déterminées sur la base de ce rapport, ainsi que, s'agissant des polyesters polyols, sur leur indice d'hydroxyle I_{OH} dont la définition est identique, *mutatis mutandis,* à celle donnée précédemment pour les polyéthers polyols.

On préfère mettre en oeuvre dans l'étape (ii) un polyester polyol (C) présentant un point de fusion supérieur ou égal à 55 °C, correspondant à une cristallinité marquée. La « green strength » du polyuréthane obtenu au terme du procédé selon l'invention est alors avantageusement améliorée.

On préfère réaliser l'étape (ii) en introduisant la quantité appropriée de polyester polyol (C) dans la quantité appropriée de polyuréthane formé à l'étape (i) chargée au préalable dans le réacteur. La réaction est mise en oeuvre à une température comprise entre 70 et 110°C.

Conformément à l'étape (iii) du procédé objet de l'invention, le polyuréthane à groupe terminal -OH qui est formé à l'issue de l'étape (ii) est réagi avec un isocyanatosilane (D) de formule :

NCO-R²-Si(R³)ₚ(OR⁴)₃₋ₚ (II)

dans laquelle :
- R² représente un radical divalent alkylène linéaire comprenant de 1 à 3 atomes de carbone ;
- R³ et R⁴, identiques ou différents, représentent chacun un radical alkyle linéaire ou ramifié de 1 à 4 atomes de carbone, avec la possibilité lorsqu'il y a plusieurs radicaux R³ (ou R⁴) que ceux-ci soient identiques ou différents ;
- p est un nombre entier égal à 0, 1 ou 2.

Les isocyanatosilanes de formule (II) sont largement disponibles dans le commerce. On peut citer à titre d'exemple le gamma-isocyanato-n-propyl-triméthoxysilane qui est disponible sous la dénomination Geniosil^{®} GF 40 ou encore le alpha-isocyanato-méthyl-diméthoxyméthylsilane qui est disponible sous la dénomination commerciale Geniosil^{®} XL 42, tous deux auprès de la société Wacker.

Les quantités d'isocyanatosilane et de polyuréthane à groupe terminal -OH formé à l'étape (ii) qui sont mises en oeuvre dans la présente étape (iii) correspondent avantageusement à un rapport équivalent -NCO/-OH compris entre 0,95 et 1,05. L'étape (iii) est mise en oeuvre à une température d'environ 100°C.

On obtient à l'issue de l'étape (iii) un polyuréthane final à blocs polyuréthane-polyéther et polyuréthane-polyester comprenant au moins 2 blocs terminaux consistant chacun d'un bloc polyuréthane-polyester relié à un groupe terminal alkoxysilane. Ledit polyuréthane final présente une masse moléculaire (Mn) comprise dans un domaine allant de 10 à 40 kDa, de préférence de 15 à 30 kDa, correspondant à un indice de polymolécularité variant d'environ 2 à 5. La viscosité à 100°C (mesurée par viscosimètre Brookfield RTV) dudit polyuréthane final peut varier dans un large domaine compris entre 3 et 300 Pa.s.

Selon une variante préférée du procédé objet de l'invention, le mélange d'alcools mis en oeuvre dans l'étape (i) comprend au moins 80 % en poids d'un polypropylène glycol diol ou triol (A) dont l'indice de polymolécularité varie de 1 à 1,4 ; et le polyester polyol (C) mis en oeuvre dans l'étape (ii) présente un point de fusion supérieur ou égal à 55°C.

Dans le cas de cette variante on obtient, après réticulation en présence d'un catalyseur approprié, un produit qui présente, dans un essai de traction, un allongement à la rupture au moins égal à 250 %, correspondant à un joint adhésif particulièrement élastique, apte par exemple à supporter dans un assemblage des contraintes mécaniques vibratoires. De telles propriétés sont appréciables notamment en vue d'une utilisation dans le domaine des moyens de transport (comme les véhicules automobiles, autobus, camions, ou encore trains ou navires).

L'invention a aussi pour objet un polyuréthane à blocs polyuréthane-polyéther et polyuréthane-polyester comprenant au moins 2 blocs terminaux consistant chacun d'un bloc polyuréthane-polyester relié à un groupe terminal alkoxysilane, ledit polyuréthane étant obtenu par le procédé également objet de l'invention et tel que décrit précédemment.

L'invention concerne encore une composition adhésive comprenant le polyuréthane selon l'invention et de 0,01% à 3 % d'un catalyseur de réticulation, de préférence de 0,1 à 1%.

Le catalyseur de réticulation utilisable dans la composition selon l'invention peut être tout catalyseur connu par l'homme du métier pour la condensation de silanol. On peut citer comme exemples de tels catalyseurs :
- des dérivés organiques du titane comme l'acétyl acétonate de titane (disponible commercialement sous la dénomination TYZOR^{®} AA75 auprès de la société DuPont),
- des dérivés organiques de l'aluminium comme le chélate d'aluminium (disponible commercialement sous la dénomination K-KAT^{®} 5218 auprès de la société King Industries),
- des dérivés organiques de l'étain comme le dilaurate de dibutyle étain (ou DBTL),
- des amines comme le 1,8-diazobicyclo (5.4.0) undécène-7 ou DBU.

On peut inclure également dans la composition selon l'invention des stabilisants UV tels que des amines, des anti-oxydants ou des résines tackifiantes compatibles.

Les anti-oxydants peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA.

En ce qui concerne la ou les résines tackifiantes éventuellement comprises dans la composition selon l'invention, on entend désigner par les termes "résine tackifiante compatible" une résine tackifiante qui, lorsqu'elle est mélangée dans les proportions 50%/50% avec le polymère selon l'invention donne un mélange substantiellement homogène.

Ces résines tackifiantes sont avantageusement choisies parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alphaméthyl styrène, ledit procédé pouvant également comprendre une réaction avec des phénols ;
- (iii) les colophanes d'origine naturelle ou modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou le pentaérythritol ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, résultant généralement de la polymérisation d'hydrocarbures terpéniques comme par exemple le mono-terpène (ou pinène) en présence de catalyseurs de Friedel-Crafts ;
- (vi) les copolymères à base de terpènes naturels, par exemple le styrène/terpène, l'alpha-méthyl styrène/terpène et le vinyl toluène/terpène ; ou bien
- (vii) les résines acryliques ayant une viscosité à 100°C inférieure à 100 Pa.s.

La composition selon l'invention peut encore comprendre d'autres (co)polymères choisis par exemple parmi :
- les copolymères d'éthylène et d'acétate de vinyle (EVA),
- les polymères acryliques,
- les poly-alpha oléfines amorphes (communément désignées par le sigle APAO), et de façon préférentielle les poly-alpha oléfines amorphes réactives (appelées APAOR) greffées avec des groupes alkoxysilyls,
- les copolymères blocs styréniques tel que les Styrène-Isoprène-Styrène (SIS),
- le polyéthylène, le polypropylène, les polyamides ou encore les polyesters.

La composition selon l'invention est de préférence, préalablement à son utilisation finale, conditionnée dans un emballage étanche à l'air pour la protéger de l'humidité ambiante. Un tel emballage peut avantageusement consister d'aluminium, de polyéthylène haute densité ou encore de polyéthylène revêtu d'une feuille d'aluminium. Une cartouche cylindrique est une forme de réalisation d'un tel emballage.

L'invention concerne enfin un procédé d'assemblage de 2 substrats comprenant :
- la fusion de la composition adhésive telle que définie précédemment, par chauffage à une température comprise entre 30 et 120°C, puis
- son enduction, sous la forme d'une couche d'épaisseur comprise entre 0,3 et 5 mm, de préférence entre 1 et 3 mm, sur au moins l'une des 2 surfaces qui appartiennent respectivement aux 2 substrats à assembler et qui sont destinées à être mises au contact l'une de l'autre dans l'assemblage selon une surface de tangence, puis, sans dépasser une période de temps correspondant au temps ouvert maximum de la composition adhésive,
- la mise en contact effective des 2 substrats selon leur surface de tangence.

Le temps ouvert maximum est l'intervalle de temps après lequel une couche d'adhésif appliquée sur un substrat perd sa capacité à fixer par collage ledit substrat à un autre substrat.

Les substrats appropriés sont, par exemple, des substrats inorganiques tels que le verre, les céramiques, le béton, les métaux ou les alliages (comme l'aluminium, l'acier, les métaux non ferreux, les métaux galvanisés) ; ou bien des substrats organiques comme le bois, des plastiques comme le PVC, le polycarbonate, le PMMA, le polyéthylène, le polypropylène, les polyesters, les résines époxy; les substrats en métal et composites revêtus de peinture (comme dans le domaine des automobiles).

Les exemples suivants sont donnés à titre purement illustratif de l'invention et ne sauraient être interprétés pour en limiter la portée.

### Exemple 1 :

### A) Préparation d'un polyuréthane selon l'invention :

Etape (i) : Synthèse d'un polyuréthane comprenant 2 groupes terminaux -NCO et un ou plusieurs blocs polyéther :
   Dans un réacteur fermé de 250 ml, équipé d'une agitation, de moyens de chauffe, d'un thermomètre et relié à une pompe à vide, on introduit 38,96 g de polyéther polyol Acclaim^{®} 8200 N ayant un nombre hydroxyle de 13,5 mg KOH par g (correspondant à un nombre équivalent de fonction -OH égal à 0,241 mmol/g). L'ensemble est chauffé à 80 °C et maintenu à pression réduite de 20 mbar durant 1 heure pour déshydrater le polyol polyéther.
   On introduit alors dans le réacteur maintenu à pression atmosphérique et porté à une température de 90°C, 4,2 mg d'un catalyseur de carboxylate de bismuth/zinc (Borchi® Kat VP0244 de la société Borchers GmbH) et 2,95 g de diisocyanate d'isophorone (titrant 37,6 % poids/poids en groupe -NCO), les quantités introduites correspondant ainsi à un ratio NCO/OH égal à 2,8. La réaction de polyaddition est poursuivie durant 4 heures jusqu'à l'obtention de 41,94 g d'un polyuréthane ayant une teneur en -NCO (suivie par titrage potentiométrique avec une amine) égale à 0,406 mmol/g, ce qui correspond à la consommation complète des fonctions hydroxyle du polyéther polyol.
Etape (ii) : Synthèse d'un polyuréthane à blocs polyéther et polyester comprenant 2 blocs terminaux polyester reliés chacun à un groupe terminal -OH :
   Dans un réacteur fermé de 250 ml équipé d'une agitation, de moyens de chauffe, d'un thermomètre et relié à une pompe à vide, on introduit 58,90 g d'un polyester diol cristallin Dynacoll^{®} 7330 de masse moléculaire en nombre 3500 Da ayant un nombre hydroxyle de 30,9 mg KOH par g (correspondant à un nombre équivalent de fonction -OH égal à 0,551 mmol/g). L'ensemble est chauffé à 105 °C et maintenu à pression réduite de 20 mbar durant 1 heure pour déshydrater le polyester polyol.
   Le réacteur est alors de nouveau porté à pression atmosphérique et maintenu sous atmosphère inerte pour chargement de 0,5 g d'anti-oxydant (Irganox® 245 de Ciba), 4,2 mg du même catalyseur qu'à l'étape (i) et enfin 41,90 g du polyuréthane obtenu à l'étape (i). Les quantités de polyester diol et prépolymère obtenu à l'étape a) correspondent à un ratio NCO/OH égal à 0,63.
   Le réacteur est alors remis sous pression réduite de 20 mbar et porté à la température de 100 °C, et la réaction de polyaddition est poursuivie durant 2 heures et demie jusqu'à consommation complète des fonctions -NCO du polyuréthane de l'étape a) (détectée par et la disparition de la bande -NCO à l'analyse Infra-rouge).
   On obtient 101,30 g de polyuréthane ayant une teneur en fonction -OH de 0,153 mmol/g.
Etape (iii) : Synthèse d'un polyuréthane à blocs polyéther et polyester comprenant 2 blocs terminaux polyesters reliés chacun à un groupe terminal alkoxy silyl :
   On introduit dans le réacteur de l'étape b) 3,16 g de gamma-isocyanato-n-propyl-triméthoxysilane (titrant 19,9 % en poids/poids de groupe -NCO), correspondant à un ratio NCO/OH égal à 1.
   Le réacteur est alors maintenu sous atmosphère inerte à 100 °C pendant 1 heure et demie jusqu'à réaction complète (détectée par la disparition de la bande -NCO à l'analyse Infra-rouge).

On obtient 104,57 gramme d'un produit blanc, solide à température ambiante.

Sa viscosité à l'état fondu mesurée par un viscosimètre Brookfield RTV (à 100 °C pour une vitesse de rotation de 20 tour/minute et une aiguille 29) est de 32 000 mPa.s.

Son point de fusion mesurée par calorimétrie différentielle à balayage ou DSC (pour Differential Scanning Calorimetry) est de 81°C.

Sa masse moléculaire moyenne en nombre est de 19596 Da, sa masse moléculaire moyenne en poids est de 44523 Da, mesurées par chromatographie d'exclusion stérique ou GPC (pour Gel Permeation Chromatography).

### B) Composition correspondante :

On introduit dans le réacteur de l'étape iii) 0,2 % en poids d'un catalyseur de réticulation constitué de dinéodécanoate de dibutyle étain (disponible par exemple auprès de la société TIB Chemicals).

La composition obtenue est laissée sous agitation et sous pression réduite de 20 mbar durant 15 minutes avant d'être conditionnée dans une cartouche en aluminium pour éviter la présence d'humidité.

La composition est ensuite soumise aux tests suivants.

### Mesure de la résistance et de l'allongement à la rupture par essai de traction :

Le principe de la mesure consiste à étirer dans une machine de traction, dont la mâchoire mobile se déplace à une vitesse constante égale à 100 mm/minute, une éprouvette standard constituée de la composition adhésive réticulée et à enregistrer, au moment où se produit la rupture de l'éprouvette, la contrainte de traction appliquée (en MPa) ainsi que l'allongement de l'éprouvette (en %).

L' éprouvette standard est en forme d' haltère, comme illustré dans la norme internationale ISO 37. La partie étroite de l'haltère utilisée a pour longueur 20 mm, pour largeur 4 mm et pour épaisseur 500 µm.

Pour préparer l'haltère, on chauffe à 100°C la composition conditionnée comme décrit précédemment, puis on extrude sur une feuille A4 de papier siliconé la quantité nécessaire pour former sur celle-ci un film ayant une épaisseur de 500 µm qui est laissé durant 2 semaines à 23°C et 55 % d'humidité relative pour réticulation. L'haltère est alors obtenue par simple découpe dans le film réticulé.

Les résultats des mesures obtenues sont indiqués dans le tableau 3.

### Test de mesure du temps de solidification de la composition adhésive :

Ce test est utilisé pour quantifier la green strength de la composition adhésive préparée précédemment.

On réalise l'assemblage de 2 planchettes rectangulaires de bois identiques (longueur de 10 cm, largeur de 2 cm et épaisseur de 1cm) en les disposant perpendiculairement selon une zone de contact carrée de 2 cm de côté située à leur extrémité. Pour cela, on procède de la façon suivante.

La composition conditionnée comme décrit précédemment est chauffée à 100°C, de manière à extruder un cordon de colle de diamètre 2 mm ayant pour longueur 2 cm qui est déposé parallèlement à la largeur d'une des 2 planchette sensiblement au milieu de la zone carrée de 2 cm de côté qui est destinée à être au contact de l'autre planchette.

Après dépôt dudit cordon, les 2 planchettes sont mises en contact et pressées manuellement de manière à former au niveau de leur zone de contact (définie comme précédemment) une couche de composition adhésive d'épaisseur comprise entre 200 et 250 µm.

Dès que l'assemblage est ainsi réalisé, l'opérateur saisit dans chaque main l'extrémité restée libre des 2 planchettes, et imprime à l'ensemble un pivotement de faible amplitude tendant à ouvrir et fermer de quelques degrés l'angle droit formé par les 2 planchettes.

Le temps de solidification est défini comme étant la durée, décomptée à partir de la réalisation de l'assemblage, au bout de laquelle la cohésion atteinte par le joint adhésif liant les 2 planchettes ne permet plus le pivotement précité.

Le résultat est indiqué dans le Tableau 3.

### Exemples 2 à 12 :

On répète l'exemple 1 A) de manière à préparer un polyuréthane selon l'invention :
   - en remplaçant toutefois dans l'étape (i) l'Acclaim^{®} 8200 N par le mélange d'alcools qui comprend au moins un polyéther polyol (A)) et dont la nature et la teneur des ingrédients (en % poids/poids) sont indiquées dans le tableau 1,
   - en remplaçant également dans l'étape (ii) le Dynacoll^{®} 7330 par le mélange de polyesters polyol dont la nature et la teneur des ingrédients (en % poids/poids) sont indiquées dans le tableau 1, et
   - en utilisant pour les rapports NCO/OH des étapes (i) et (ii) les valeurs indiquées dans le tableau 1.

Les valeurs obtenues pour la viscosité à l'état fondu, le point de fusion et la masse moléculaire en poids sont indiquées dans le tableau 2.

On répète l'exemple 1 B) avec chacun des polyuréthanes ainsi obtenus.

Les résultats des tests obtenus pour les compositions correspondantes sont indiqués dans le tableau 3.

### Exemple 13 (comparatif) :

On utilise un polymère MS consistant en 2 groupes terminaux n-propyl diméthoxyméthylsilane reliés directement à une chaîne principale de type polypropylèneglycol, ledit polymère étant obtenu sous la dénomination S 303H auprès de la société Kaneka.

On prépare par simple mélange une composition consistant de 99,8 % de ce polymère et de 0,2 % du catalyseur de réticulation de l'exemple 1 B), qui est ensuite conditionnée dans une cartouche en aluminium.

On répète alors les tests décrits dans l'exemple 1 B) et les résultats obtenus sont indiqués dans le tableau 3.

### Exemple 14 (comparatif) :

On répète l'exemple 13 en utilisant un polymère MS consistant en 2 groupes terminaux méthoxysilane reliés indirectement à une chaîne principale de type polypropylèneglycol par un motif comprenant une fonction uréthane. Ce polymère est obtenu sous la dénomination Geniosil® STP-E35 auprès de la société Wacker.

Les résultats obtenus sont également indiqués dans le tableau 3.

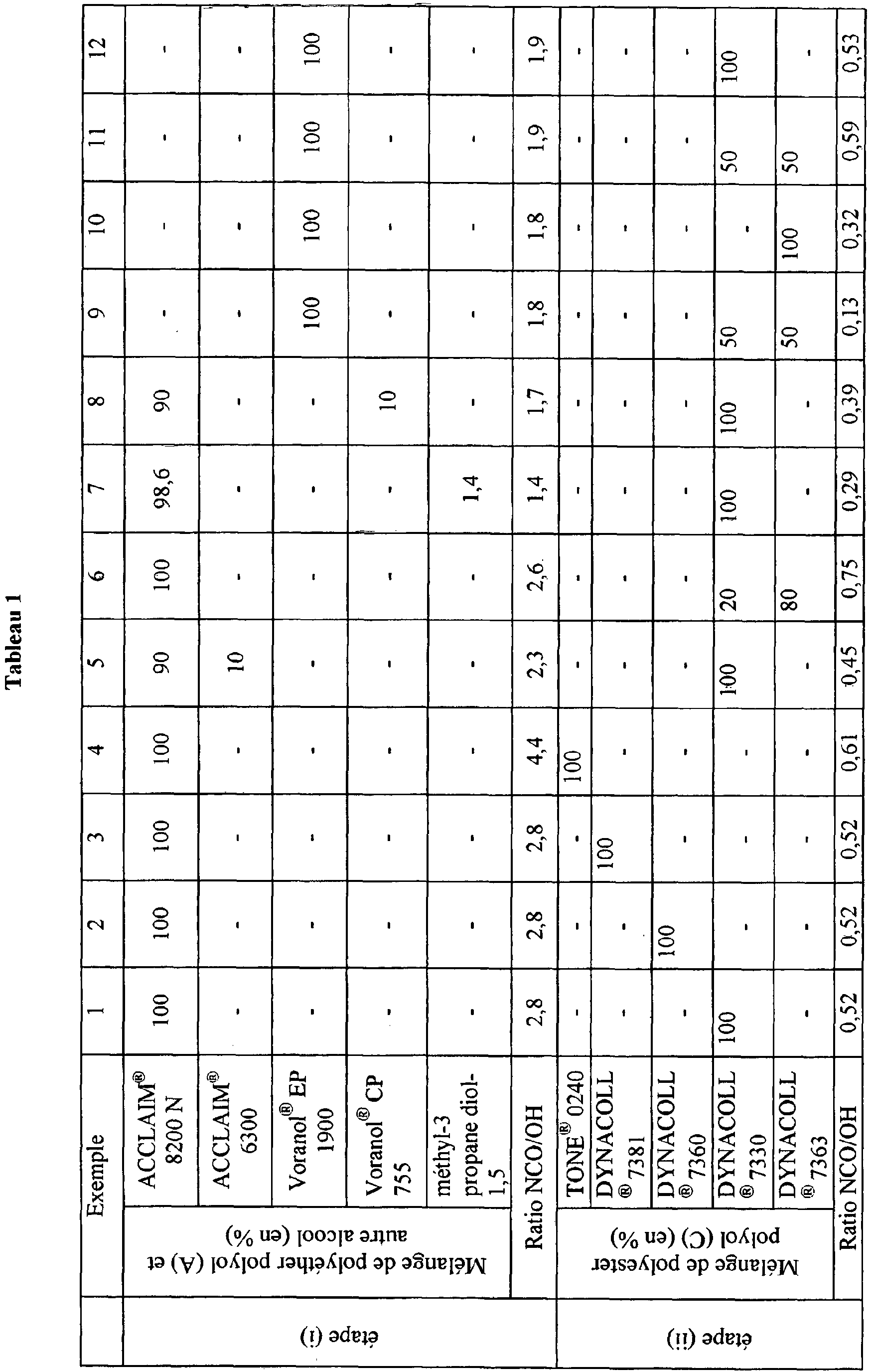

**Tableau 2**

| Exemple | 1 | 2 | 3 | 4 | 5 | 6 | 7 | 8 | 9 | 10 | 11 | 12 |
|---|---|---|---|---|---|---|---|---|---|---|---|---|
| Viscosité Brookfield RTV à 100 °C (en Pa.s) | 32 | 21 | 29,5 | 19,4 | 39,8 | 280 | 17,5 | 55 | 6,4 | 19,7 | 31,5 | 30,2 |
| Point de fusion (en °C) | 81 | 52 | 63 | 36 | ND | ND | ND | ND | ND | ND | ND | ND |
| Masse moléculaire moyenne en nombre (en Da) | 19 596 | ND | ND | ND | ND | ND | 17 926 | ND | ND | ND | 20 724 | ND |
| Indice de polymolécularité | 2,3 | ND | ND | ND | ND | ND | 4,1 | ND | ND | ND | 2,6 | ND |

| | | | | | | | | | | | | |
|---|---|---|---|---|---|---|---|---|---|---|---|---|
| ND = Non Déterminé | | | | | | | | | | | | |

**Tableau 3**

| Exemple | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Résistance à la rupture (en MPa) | 8,3 | 7,8 | 5,4 | 6,8 | 8,5 | 3,3 | 7,6 | 9,4 | 13,8 | 8,1 | 7,0 | 6,2 | 0,3 | 0,8 |
| Allongement à la rupture (en %) | 679 | 582 | 554 | 558 | 668 | 287 | 615 | 379 | 11 | 178 | 31 | 53 | 110 | 140 |
| Temps de solidification | 12 s | 37 s | 17 s | 35 min | 7 s | 35 s | 12 s | 12 s | 7 s | 20 s | 17 s | 7 s | > 24 heures | 1,5 heure |

## Revendications

1. Procédé de préparation d'un polyuréthane à blocs polyuréthane-polyéther et polyuréthane-polyester comprenant au moins 2 blocs terminaux consistant chacun d'un bloc polyuréthane-polyester relié à un groupe terminal alkoxysilane, ledit procédé comprenant les étapes séquentielles :
(i) de réaction d'un mélange d'alcools comprenant un polyéther polyol (A) avec un excès stoechiométrique d'un diisocyanate (B), pour former un bloc polyuréthane-polyéther possédant au moins 2 groupes terminaux -NCO, ledit diisocyanate (B) étant soit un diisocyanate aliphatique, soit un diisocyanate aromatique de formule :
NCO-R¹-NCO (I)
dans laquelle R¹ représente un radical divalent aromatique hydrocarboné comprenant de 5 à 15 atomes de carbone qui peut être linéaire, ramifié ou cyclique, puis
(ii) de réaction du polyuréthane de l'étape (i) avec un excès stoechiométrique d'un polyester polyol (C), pour former un polyuréthane à blocs polyuréthane-polyéther et polyuréthane-polyester comprenant au moins 2 blocs terminaux consistant chacun d'un bloc polyuréthane-polyester relié à un groupe terminal -OH, puis
(iii) de réaction du polyuréthane à groupe terminal -OH de l'étape (ii) avec une quantité stoechiométrique d'un isocyanatosilane (D).

2. Procédé de préparation d'un polyuréthane selon la revendication 1, **caractérisé en ce que** le polyéther polyol (A) mis en oeuvre dans l'étape (i) est un polyéther diol seul ou en mélange avec jusqu'à 30 % en poids d'un polyéther triol.

3. Procédé de préparation d'un polyuréthane selon l'une des revendications 1 ou 2, **caractérisé en ce que** le polyéther polyol (A) est choisi parmi les polypropylène glycols de fonctionnalité hydroxyle égale à 2 ou 3.

4. Procédé de préparation d'un polyuréthane selon l'une des revendications 1 à 3, **caractérisé en ce qu'**on utilise comme polyéther polyol (A) un polypropylène glycol diol ou triol dont l'indice de polymolécularité varie de 1 à 1,4.

5. Procédé de préparation d'un polyuréthane selon l'une des revendications 1 à 4, **caractérisé en ce que** düsocyanate (B) a pour formule :
NCO-R¹-NCO (I)
dans laquelle R¹ représente un radical divalent aliphatique ou aromatique hydrocarboné comprenant de 5 à 15 atomes de carbone qui peut être linéaire, ramifié ou cyclique.

6. Procédé de préparation d'un polyuréthane selon l'une des revendications 1 à 5, **caractérisé en ce que** R¹ est choisi parmi l'un des radicaux divalents suivants dont les formules ci-dessous font apparaître les 2 valences libres :
- a) le radical divalent dérivé de l'isophorone : 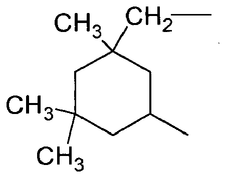
- b) 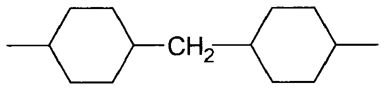
- c)
-(CH₂)₆- (ou radical hexaméthylène)
- d) 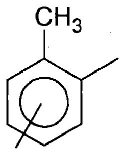
- e)

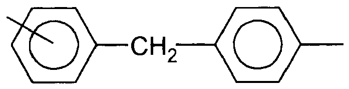

7. Procédé de préparation d'un polyuréthane selon l'une des revendications 1 à 6, **caractérisé en ce que** les quantités des 2 réactifs mises en oeuvre dans l'étape (i) correspondent à un rapport équivalent -NCO/-OH compris entre 1,3 et 5.

8. Procédé de préparation d'un polyuréthane selon l'une des revendications 1 à 7, **caractérisé en ce qu'**on met en oeuvre dans l'étape (ii) un ou plusieurs polyester polyols ayant une fonctionnalité -OH de 2.

9. Procédé de préparation d'un polyuréthane selon l'une des revendications 1 à 8, **caractérisé en ce que** les quantités de réactifs mises en oeuvre dans l'étape (ii) correspondent à un rapport équivalent -NCO/-OH compris entre 0,10 et 0,80.

10. Procédé de préparation d'un polyuréthane selon l'une des revendications 1 à 9, **caractérisé en ce qu'**on met en oeuvre dans l'étape (ii) un polyester polyol (C) présentant un point de fusion supérieur ou égal à 55 °C.

11. Procédé de préparation d'un polyuréthane selon l'une des revendications 1 à 10, **caractérisé en ce que** l'isocyanatosilane (D) a pour formule :
NCO-R²-Si(R³)ₚ(OR⁴)₃₋ₚ (II)
dans laquelle :
- R² représente un radical divalent alkylène linéaire comprenant de 1 à 3 atomes de carbone ;
- R³ et R⁴, identiques ou différents, représentent chacun un radical alkyle linéaire ou ramifié de 1 à 4 atomes de carbone, avec la possibilité lorsqu'il y a plusieurs radicaux R³ (ou R⁴) que ceux-ci soient identiques ou différents ;
- p est un nombre entier égal à 0, 1 ou 2.

12. Procédé de préparation d'un polyuréthane selon l'une des revendications 1 à 11, **caractérisé en ce que** le mélange d'alcools mis en oeuvre dans l'étape (i) comprend au moins 80 % en poids d'un polypropylène glycol diol ou triol (A) dont l'indice de polymolécularité varie de 1 à 1,4 ; et le polyester polyol (C) mis en oeuvre dans l'étape (ii) présente un point de fusion supérieur ou égal à 55°C.

13. Polyuréthane à blocs polyuréthane-polyéther et polyuréthane-polyester comprenant au moins 2 blocs terminaux consistant chacun d'un bloc polyuréthane-polyester relié à un groupe terminal alkoxysilane, ledit polyuréthane étant obtenu par le procédé tel que défini dans l'une des revendications 1 à 12.

14. Composition adhésive comprenant le polyuréthane tel que défini dans la revendication 13 et de 0,01% à 3 % d'un catalyseur de réticulation.

15. Procédé d'assemblage de 2 substrats comprenant :
- la fusion de la composition adhésive telle que définie dans la revendication 14, par chauffage à une température comprise entre 30 et 120°C, puis
- son enduction, sous la forme d'une couche d'épaisseur comprise entre 0,3 et 5 mm, sur au moins l'une des 2 surfaces qui appartiennent respectivement aux 2 substrats à assembler et qui sont destinées à être mises au contact l'une de l'autre dans l'assemblage selon une surface de tangence, puis, sans dépasser une période de temps correspondant au temps ouvert maximum de la composition adhésive,
- la mise en contact effective des 2 substrats selon leur surface de tangence.

## Patentansprüche

1. Verfahren zur Herstellung eines Polyurethans mit Polyurethan-Polyether- und Polyurethan-Polyester-Blöcken, das mindestens 2 endständige Blöcke aufweist, die jeweils aus einem an eine Alkoxy-silan-Endgruppe gebundenen Polyurethan-Polyester-Block bestehen, wobei das Verfahren die folgenden aufeinanderfolgenden Schritte umfasst:
(i) Umsetzen einer ein Polyetherpolyol (A) umfassenden Mischung von Alkoholen mit einem stöchiometrischen Überschuss eines Diisocyanats (B) zur Bildung eines Polyurethan-Polyether-Blocks mit mindestens 2 -NCO-Endgruppen, wobei das Diisocyanat (B) entweder ein aliphatisches Diisocyanat ist oder ein aromatisches Diisocyanat, das die folgende Formel aufweist, ist:
NCO-R¹-NCO (I)
worin R¹ für einen zweiwertigen aromatischen Kohlenwasserstoffrest mit 5 bis 15 Kohlenstoffatomen, der linear, verzweigt oder cyclisch sein kann, steht, dann
(ii) Umsetzen des Polyurethans aus Schritt (i) mit einem stöchiometrischen Überschuss eines Polyesterpolyols (C) zur Bildung eines Polyurethans mit Polyurethan-Polyether- und Polyurethan-Polyester-Blöcken, das mindestens 2 endständige Blöcke aufweist, die jeweils aus einem an eine -OH-Endgruppe gebundenen Polyurethan-Polyester-Block bestehen, dann
(iii) Umsetzen des Polyurethans mit -OH-Endgruppe aus Schritt (ii) mit einer stöchiometrischen Menge eines Isocyanatosilans (D).

2. Verfahren zur Herstellung eines Polyurethans nach Anspruch 1, **dadurch gekennzeichnet, dass** es sich bei dem in Schritt (i) eingesetzten Polyetherpolyol (A) um ein Polyetherdiol für sich alleine oder in Abmischung mit bis zu 30 Gew.-% eines Polyethertriols handelt.

3. Verfahren zur Herstellung eines Polyurethans nach Anspruch 1 oder 2, **dadurch gekennzeichnet, dass** das Polyetherpolyol (A) aus Polypropylenglykolen mit einer Hydroxylfunktionalität von 2 oder 3 ausgewählt wird.

4. Verfahren zur Herstellung eines Polyurethans nach einem der Ansprüche 1 bis 3, **dadurch gekennzeichnet, dass** man als Polyetherpolyol (A) ein Polypropylenglykoldiol oder -triol mit einem Polymolekularitätsindex im Bereich von 1 bis 1,4 verwendet.

5. Verfahren zur Herstellung eines Polyurethans nach einem der Ansprüche 1 bis 4, **dadurch gekennzeichnet, dass** das Diisocyanat (B) die folgende Formel aufweist:
NCO-R¹-NCO (I)
worin R¹ für einen zweiwertigen aliphatischen oder aromatischen Kohlenwasserstoffrest mit 5 bis 15 Kohlenstoffatomen, der linear, verzweigt oder cyclisch sein kann, steht.

6. Verfahren zur Herstellung eines Polyurethans nach einem der Ansprüche 1 bis 5, **dadurch gekennzeichnet, dass** R¹ aus einem der folgenden zweiwertigen Reste, deren nachstehende Formeln die 2 freien Valenzen zeigen, ausgewählt ist:
- a) dem zweiwertigen Rest, der sich von Isophoron ableitet: 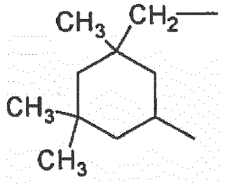
- b) 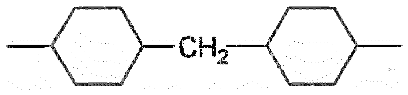
- C)
- (C_{H}2₎ 6- (oder Hexamethylenrest)
- d) 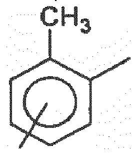
- e)

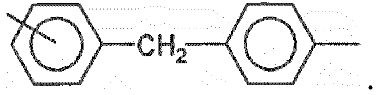

7. Verfahren zur Herstellung eines Polyurethans nach einem der Ansprüche 1 bis 6, **dadurch gekennzeichnet, dass** die Mengen der 2 in Schritt (i) eingesetzten Reaktanten einem -NCO/-0H-Äquivalentverhältnis zwischen 1,3 und 5 entsprechen.

8. Verfahren zur Herstellung eines Polyurethans nach einem der Ansprüche 1 bis 7, **dadurch gekennzeichnet, dass** man in Schritt (ii) ein oder mehrere Polyesterpolyole mit einer -OH-Funktionalität von 2 einsetzt.

9. Verfahren zur Herstellung eines Polyurethans nach einem der Ansprüche 1 bis 8, **dadurch gekennzeichnet, dass** die Mengen der in Schritt (ii) eingesetzten Reaktanten einem -NCO/-OH-Äquivalentverhältnis zwischen 0,10 und 0,80 entsprechen.

10. Verfahren zur Herstellung eines Polyurethans nach einem der Ansprüche 1 bis 9, **dadurch gekennzeichnet, dass** man in Schritt (ii) ein Polyesterpolyol (C) mit einem Schmelzpunkt größer gleich 55°C einsetzt.

11. Verfahren zur Herstellung eines Polyurethans nach einem der Ansprüche 1 bis 10, **dadurch gekennzeichnet, dass** das Isocyanatosilan (D) die folgende Formel aufweist:
NCO-R²-Si(R³)ₚ(OR⁴)₃₋ₚ (II)
worin:
- R² für einen zweiwertigen linearen Alkylenrest mit 1 bis 3 Kohlenstoffatomen steht;
- R³ und R⁴ gleich oder verschieden sind und jeweils für einen linearen oder verzweigten Alkylrest mit 1 bis 4 Kohlenstoffatomen stehen, wobei dann, wenn mehrere Reste R³ (oder R⁴) vorliegen, diese gleich oder verschieden sein können;
- p für eine ganze Zahl gleich 0, 1 oder 2 steht.

12. Verfahren zur Herstellung eines Polyurethans nach einem der Ansprüche 1 bis 11, **dadurch gekennzeichnet, dass** die in Schritt (i) eingesetzte Mischung von Alkoholen mindestens 80 Gew.-% eines Polypropylenglykoldiols oder -triols (A) mit einem Polymolekularitätsindex im Bereich von 1 bis 1,4 umfasst und das in Schritt (ii) eingesetzte Polyesterpolyol (C) einen Schmelzpunkt größer gleich 55°C aufweist.

13. Polyurethan mit Polyurethan-Polyether- und Polyurethan-Polyester-Blöcken, das mindestens 2 end-ständige Blöcke aufweist, die jeweils aus einem an eine Alkoxysilan-Endgruppe gebundenen Polyurethan-Polyester-Block bestehen, wobei das Polyurethan durch das Verfahren gemäß einem der Ansprüche 1 bis 12 erhalten wird.

14. Klebstoffzusammensetzung, umfassend das Polyurethan gemäß Anspruch 13 und 0,01% bis 3% eines Vernetzungskatalysators.

15. Verfahren zum Zusammenfügen von 2 Substraten, bei dem man
- die Klebstoffzusammensetzung gemäß Anspruch 14 durch Erhitzen auf eine Temperatur zwischen 30 und 120°C aufschmilzt,
- sie dann in Form einer Schicht mit einer Dicke zwischen 0,3 und 5 mm auf mindestens eine der 2 jeweils zu den 2 zusammenzufügenden und beim Zusammenfügen an einer Berührungsfläche miteinander in Kontakt zu bringenden Substraten gehörenden Oberflächen aufbringt und dann ohne Überschreiten eines der maximalen offenen Zeit der Klebstoffzusammensetzung entsprechenden Zeitraums
- die 2 Substrate an ihrer Berührungsfläche in effektiven Kontakt bringt.

## Claims

1. Method of preparing a polyurethane with polyurethane-polyether and polyurethane-polyester blocks comprising at least 2 end blocks each consisting of a polyurethane-polyester block joined to an alkoxysilane end group, said method comprising the sequential steps of:
(i) reaction of a mixture of alcohols comprising a polyether polyol (A) with a stoichiometric excess of an diisocyanate (B), to form a polyurethane-polyether block possessing at least 2 -NCO end groups, said diisocyanate (B) being either an aliphatic diisocyanate, or an aromatic diisocyanate having the formula:
NCO-R¹-NCO (I)
in which R¹ represents a divalent aromatic hydrocarbon radical comprising 5 to 15 carbon atoms which can be linear, branched or cyclic, then
(ii) reaction of the polyurethane from step (i) with a stoichiometric excess of a polyester polyol (C), to form a polyurethane with polyurethane-polyether and polyurethane-polyester blocks comprising at least 2 end blocks each consisting of a polyurethane-polyester block joined to an -OH end group, then
(iii) reaction of the polyurethane with -OH end group from step (ii) with a stoichiometric amount of an isocyanatosilane (D).

2. Method of preparing a polyurethane according to Claim 1, **characterized in that** the polyether polyol (A) used in step (i) is a polyether diol alone or mixed with up to 30 wt.% of a polyether triol.

3. Method of preparing a polyurethane according to one of Claims 1 or 2, **characterized in that** the polyether polyol (A) is selected from polypropylene glycols with hydroxyl functionality equal to 2 or 3.

4. Method of preparing a polyurethane according to one of Claims 1 to 3, **characterized in that** a polypropylene glycol diol or triol whose polymolecularity index varies from 1 to 1.4 is used as polyether polyol (A).

5. Method of preparing a polyurethane according to one of Claims 1 to 4, **characterized in that** diisocyanate (B) has the formula:
NCO-R¹-NCO (I)
in which R¹ represents a divalent aliphatic or aromatic hydrocarbon radical comprising 5 to 15 carbon atoms which can be linear, branched or cyclic.

6. Method of preparing a polyurethane according to one of Claims 1 to 5, **characterized in that** R¹ is selected from one of the following divalent radicals whose formulae given below show the 2 free valences:
- a) the divalent radical derived from isophorone: 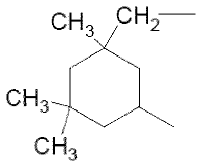
- b) 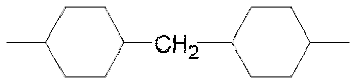
- c)
-(CH₂)₆- (or hexamethylene radical)
- d) 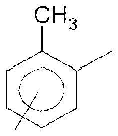
- e)

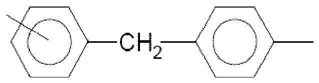

7. Method of preparing a polyurethane according to one of Claims 1 to 6, **characterized in that** the amounts of the 2 reactants used in step (i) correspond to an -NCO/-OH equivalent ratio between 1.3 and 5.

8. Method of preparing a polyurethane according to one of Claims 1 to 7, **characterized in that** one or more polyester polyols having an -OH functionality of 2 are used in step (ii).

9. Method of preparing a polyurethane according to one of Claims 1 to 8, **characterized in that** the amounts of reactants used in step (ii) correspond to an -NCO/ -OH equivalent ratio between 0.10 and 0.80.

10. Method of preparing a polyurethane according to one of Claims 1 to 9, **characterized in that** a polyester polyol (C) having a melting point greater than or equal to 55°C is used in step (ii).

11. Method of preparing a polyurethane according to one of Claims 1 to 10, **characterized in that** the isocyanatosilane (D) has the formula:
NCO-R²-Si(R³)ₚ(OR⁴)₃₋ₚ (II)
in which:
- R² represents a divalent linear alkylene radical comprising 1 to 3 carbon atoms;
- R³ and R⁴, which may be identical or different, each represent a linear or branched alkyl radical with from 1 to 4 carbon atoms, with the possibility that when there are several radicals R³ (or R⁴) the latter are identical or different;
- p is an integer equal to 0, 1 or 2.

12. Method of preparing a polyurethane according to one of Claims 1 to 11, **characterized in that** the mixture of alcohols used in step (i) comprises at least 80 wt.% of a polypropylene glycol diol or triol (A) whose polymolecularity index varies from 1 to 1.4; and the polyester polyol (C) used in step (ii) has a melting point greater than or equal to 55°C.

13. Polyurethane with polyurethane-polyether and polyurethane-polyester blocks comprising at least 2 end blocks each consisting of a polyurethane-polyester block joined to an alkoxysilane end group, said polyurethane being obtained by the method as defined in one of Claims 1 to 12.

14. Adhesive composition comprising the polyurethane as defined in Claim 13 and from 0.01% to 3% of a crosslinking catalyst.

15. Method of assembly of 2 substrates comprising:
- melting the adhesive composition as defined in Claim 14, by heating at a temperature between 30 and 120°C, then
- coating it, in the form of a layer of thickness between 0.3 and 5 mm, on at least one of the 2 surfaces belonging respectively to the 2 substrates to be assembled and which are intended to be brought into contact with one another during assembly on a faying surface, then, without exceeding a period of time corresponding to the maximum open assembly time of the adhesive composition,
- bringing the 2 substrates into effective contact on their faying surface.
